# EUROPEAN PATENT SPECIFICATION

(11) **EP 0 265 064 B1**
(45) Date of publication and mention of the grant of the patent: **27.07.1994**
(21) Application number: 87308003.0
(22) Date of filing: 10.09.1987
(51) Int. Cl.: G08B 3/10, H04Q 7/02

(54) **Multi-alert radio paging receiver**
Funkrufempfänger mit einer vielfalt von Warnzeichen
Récepteur d'appel par radio avec alertes multiples

(30) Priority: 16.09.1986 JP 217625/86
(43) Date of publication of application: 27.04.1988
(73) Proprietor: NEC CORPORATION, Tokyo (JP)
(72) Inventor: Tsunoda, Kazuyuki, Minato-ku Tokyo (JP)
(74) Representative: Abnett, Richard Charles

(56) References cited:
- EP-A- 0 086 255
- GB-A- 2 061 582
- GB-A- 2 090 450
- GB-A- 2 097 158
- GB-A- 2 118 337
- GB-A- 2 146 153
- GB-A- 2 150 327

## Description

The present invention relates to a multi-alert radio paging receiver and method.

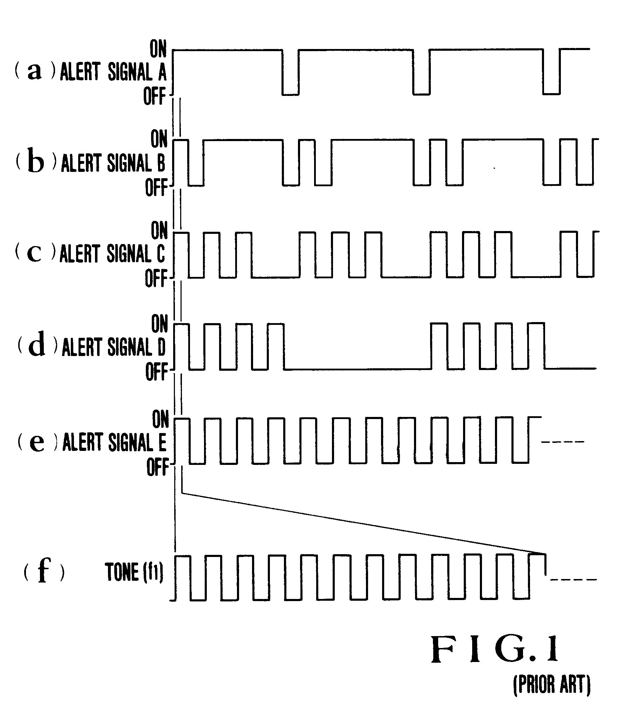

An alert means of a conventional radio paging receiver utilizes beeping, flickering of LEDs, or vibration. Along with multifunctions of the radio paging receiver, a multi-address radio paging receiver is proposed. For example, the POCSAG code internationally standardized as the Radio Paging Code No. 1 (RPC1) by the CCIR allows a radio paging receiver to have four paging addresses. Conventionally, for example, when beep or alert signals A, B, C, D, and E correspond to paging addresses, the alert signals A to E are distinguished from each other by changing the ON/OFF duration of a tone having a single frequency F₁, as shown in Figs. 1(a) to 1(f). When the multi-address radio paging receiver adopts the above method wherein the ON/OFF duration of the tone having a single frequency is changed, the alert signals are complicated, and cannot be easily distinguished from each other.

However, if additional call signals are to be generated by utilizing a tone having another frequency, the difference between the frequencies must be increased to easily distinguish the call signals from each other. A loudspeaker used for the conventional radio paging receiver is usually designed to resonate at a single frequency in order to realize a compact structure and a high sound pressure. Therefore, the sound pressure is noticeably decreased with respect to the other frequency.

Our United Kingdom Patent Application GB-A-2 061 582 describes a paging receiver which is adapted to receive and recognise one receiver address code (calling signal code) and a plurality of message codes. The pager has an alert tone generating circuit which can generate, in response to reception of the correct receiver address code, one of a plurality of different alert tone frequencies, as selected by a transmitted message code.

Our United Kingdom Patent Application GB-A-2 118 337 describes a paging receiver which is adapted to receive and recognise one of a number of receiver address codes pre-assigned to that receiver and to generate a different alert tone in dependence upon which of the receiver address it is that is recognised.

Our United Kingdom Patent Application GB-A-2 090 450 describes a pager receiver which produces only one sound frequency, and which has an audible annunciator which resonates in the vicinity of the single sound frequency.

### Summary of the Invention

The invention provides a multi-alert paging receiver and mehod, in which the receiver has a plurality of addresses, and in which a plurality of ON/OFF alert signals are generated which have ON/OFF durations corresponding to the plurality of addresses. The alert signals include at least one alert signal which has an ON duration in which a plurality of tones with different frequencies are included. In each case these different frequencies include one specific frequency to which the loudspeaker of the receiver is resonant.

### Brief Description of the Drawings

Figs. 1(a) to 1(f) are timing charts showing conventional alert signals;
Fig. 2 is a block diagram showing an arrangement of a radio paging receiver to which the present invention is applied;
Figs. 3(a) to 3(g) are timing charts showing alert signals according to the present invention;
Fig. 4 is a block diagram showing a decoder circuit according to an embodiment of the present invention;
Figs. 5(a) to 5(c) show formats of input signals to the decoder circuit shown in Fig. 4;
Figs. 6(A) to 6(J) are timing charts showing signal waveforms of the respective sections in one alert mode;
Figs. 7(D) to 7(J) are timing charts showing signal waveforms of the respective sections in Fig. 4 in another alert mode; and
Fig. 8 is a graph showing a measurement result for explaining the effect of the present invention.

### Detailed Description of the Preferred Embodiment

A radio paging receiver according to the present invention will now be described with reference to the accompanying drawings.

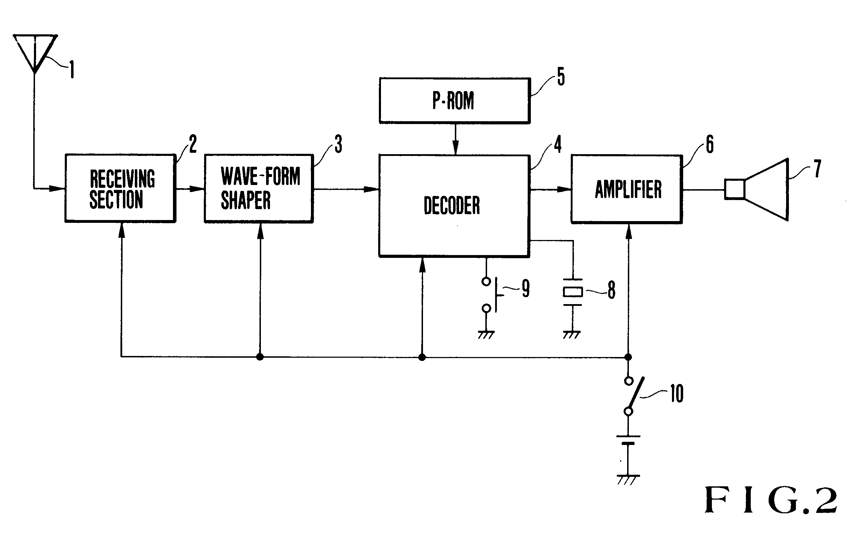

Fig. 2 is a block diagram of a radio paging receiver to which the present invention is applied. Referring to Fig. 2, a radio signal received by an antenna 1 is amplified and demodulated by a receiving section 2. The demodulated signal is converted by a waveform shaper 3 into a signal having a waveform that can be read by a decoder 4. In the decoder 4, a paging address prestored in a programmable read-only memory (P-ROM) 5 is compared with the signal from the waveform shaper 3. When a coincidence is established therebetween, the decoder 4 supplies, to an amplifier 6, an alert-signal corresponding to the paging address to drive a loudspeaker 7, thereby informing the pager bearer of being paged. A reset switch 9 is connected to the decoder 4 to stop the alert signal. A quartz oscillator 8 generates a clock for driving the decoder 4. Power for the circuits is provided from a battery through a switch 10.

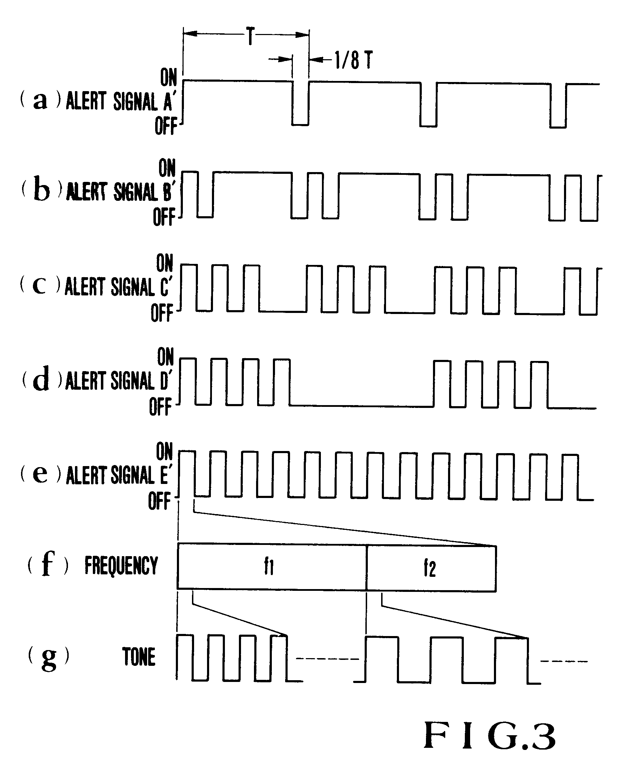

Fig. 3 shows a plurality of types of alert signals generated by a paging receiver according to an embodiment of the present invention. The ON/OFF durations of alert signals A' to E' shown in Fig. 3 are the same as those of the alert signals A to E shown in Fig. 1. In this embodiment, however, the shortest duration (e.g., 1/8 a period T in the alert signal A') of the ON/OFF durations of the alert signals corresponds to a frequency f₁ of the tone or to two different frequencies f₁ and f₂. The frequency f₁ coincides with the tone frequency in Fig. 1(f) at which the loudspeaker 7 resonates.

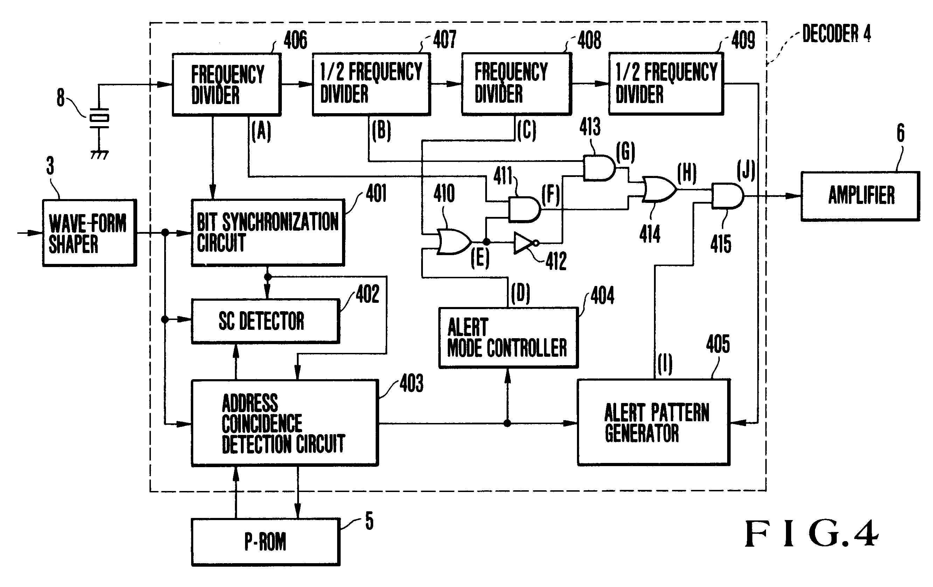

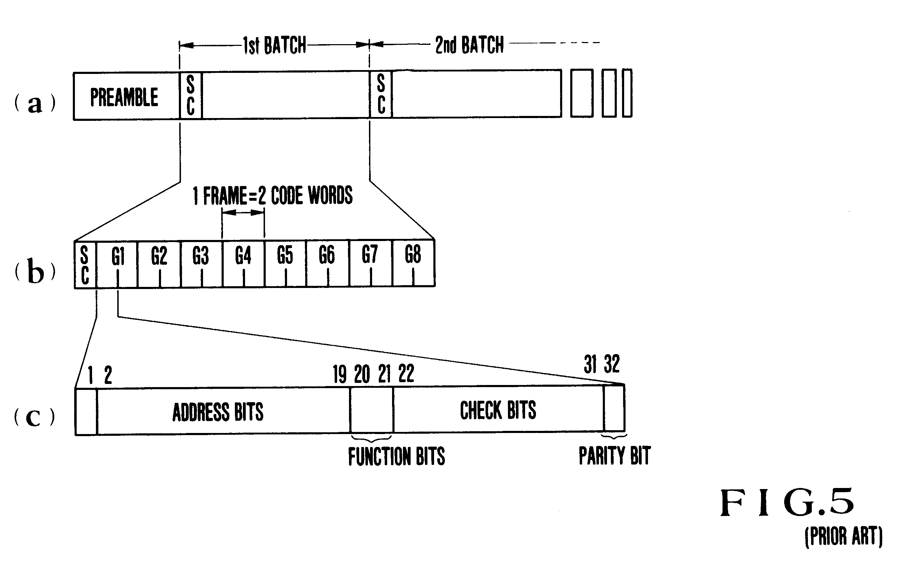

Fig. 4 is a block diagram showing a detailed circuit arrangement of the decoder 4 shown in Fig. 2. Referring to Fig. 4, the output from the waveform shaper 3 corresponds to a signal having an arrangement shown in Figs. 5(a), 5(b) and 5(c), and is input to a bit synchronization circuit 401, an SC detector 402, and an address coincidence detection circuit 403. The bit synchronization circuit 401 performs bit synchronization between the input signal and a data read-in clock from a frequency divider 406. The SC detector 402 detects a frame synchronization signal (SC) following a preamble signal to perform frame synchronization. The address coincidence detection circuit 403 compares a plurality of addresses in the P-ROM 5 and a received address shown in Fig. 5(c). When a coincidence therebetween is detected, the received address is input to an alert pattern generator 405 and an alert mode controller 404. If the received address is set in a two-frequency alert mode, the alert mode controller 404 sets an output signal (D) at Low level. The alert pattern generator 405 outputs a signal (I) having an ON-OFF pattern corresponding to the received address. Reference numerals 406 to 409 denote frequency dividers for frequency-dividing a clock signal from the clock oscillator 8. An OR gate 410 outputs an OR signal (E) of the output (D) from the alert mode controller 404 and an output (C) from the frequency divider 408. An AND gate 411 outputs an AND signal (F) of an output (E) from the OR gate 410 and an output (A) from the frequency divider 406. An AND gate 413 outputs an AND signal (G) of an output (B) from the frequency divider 407 and a signal obtained by inverting the output (E) from the OR gate 410 by an inverter 412. An OR gate 414 provides an OR signal (H) of outputs (F) and (G) from the AND gates 411 and 413. An AND gate 415 provides an AND signal (J) of an output (H) from the OR gate 414 and an output (I) from the alert pattern generator 405, and outputs the AND signal to the amplifier 6.

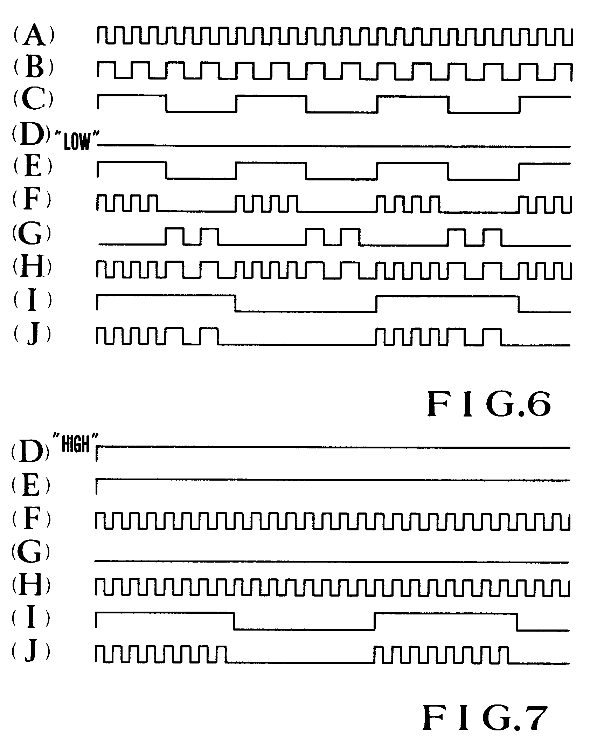

Fig. 6 shows signal waveforms of the respective sections when the output (D) from the alert mode controller 404 is set at "Low" level. As shown in Fig. 6, the output (J) from the AND gate 415 serves as a two-frequency alert signal. Fig. 7 shows signal waveforms of the respective sections when the output (D) from the alert mode controller 404 is set at "High" level. As shown in Fig. 7, the output (J) from the AND gate 415 serves as a single frequency signal.

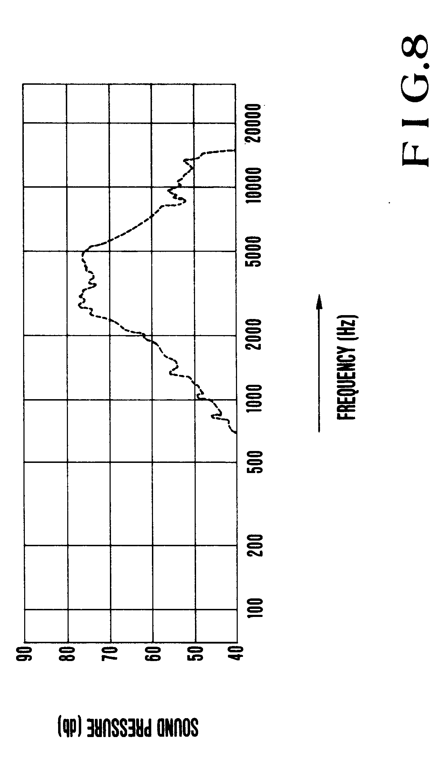

Fig. 8 is a graph showing comparison result of sound pressure measurement using the conventional paging receiver and the paging receiver of the present invention. In measurement, the following alert signals were output from paging receivers placed in an anechoic room, and were detected by a microphone so that a sound pressure was measured by a sound pressure level meter:
(1) conventional alert signal (ON-OFF at a single frequency of 2.7 kHz)
(2) alert signal having two frequencies including frequency of 2.7 kHz and another frequency of 1.35 kHz
(3) ON-OFF at a single frequency of 2 kHz
(4) ON-OFF at a single frequency of 1.5 kHz

The measurement results are summarized in Table below. It should be noted that the loudspeaker 7 resonates at the specific frequency of 2.7 kHz.

**TABLE 1**

| | Sound Pressure (dB) | Relative value when Conventional alert signal is given by 0 dB |
|---|---|---|
| 1-Frequency Mode (2.7 kHz) | 83 | 0 dB |
| 2-Frequency Mode | 81 | -2 |
| 1-Frequency Mode (2.0 kHz) | 74 | -9 |
| 1-Frequency Mode (1.5 kHz) | 74 | -9 |

According to the graph,
the sound pressure is 77 dB at 2.7 kHz;
62 dB at 2.0 kHz; and
55 dB at 1.5 kHz.

As can be seen from the graph, in the single frequency mode, when the frequency is noticeably changed, the sound pressure is greatly reduced. In contrast to this, the alert signal in the two-frequency mode is substantially free from a decrease in sound pressure.

According to the present invention as described above, as compared to the conventional paging receiver wherein ON-OFF durations are formed by turning on and off an alert signal of a single frequency, ON durations are constituted by combinations of alert signals of at least two frequencies including the specific single frequency. The number of types of alert signals which can be relatively easily distinguished can be increased to twice that of the conventional paging receiver. Since the alert signals of the present invention are constituted to include the conventional single frequency, they will not be influenced by acoustic characteristics of a loudspeaker and the like, and a sound pressure is not so degraded.

## Claims

1. A multi-alert paging receiver having a plurality of addresses, comprising a decoder (4) which generates a plurality of ON/OFF alert signals having ON/OFF durations, the patterns of said ON/OFF durations corresponding to said plurality of addresses, respectively, and a loudspeaker (7) connected to receive said alert signals, and in which:
said alert signals include at least one alert signal having an ON duration in which a plurality of tones with different frequencies (f₁ and f₂) are included, and
said different frequencies include at least one specific frequency (f₁) to which said loudspeaker (7) is resonant.

2. A receiver according to claim 1, in which one group of alert signals have single-tone ON durations of a first frequency (f₁), while a second group of alert signals have two-tone ON durations with portions of the first frequency (f₁) alternating with portions of a second frequency (f₂).

3. A receiver according to claim 1 or 2, in which the decoder (4) comprises a plurality of series-connected frequency dividers (406-408), means (403) for detecting an address included in an input signal, an alert pattern generator (405) for outputting a signal representing an alert pattern (I) corresponding to the address output from the address detection means, an alert mode controller (404) for outputting a signal (D) indicating which combination of frequencies (f₁, f₂) is to be used to constitute the alert signal, and a logic circuit (410-415) for constituting the alert signals (J) based on the output signal (I) from the alert pattern generator, the output signal (D) from the alert mode controller, and the output signals (A, B, C) from the frequency dividers (406-408).

4. A method of generating a plurality of alert signals for a paging receiver to which a plurality of addresses are assigned, including the step of generating a plurality of alert signals having ON/OFF durations, the patterns of said ON/OFF durations corresponding to said plurality of addresses, respectively, and comprising the step of:
generating as one of said alert signals an alert signal having an ON duration in which a plurality of tones with different frequencies (f₁ and f₂) are included, and
said different frequencies including at least one specific frequency (f₁) to which a loudspeaker of the receiver is resonant.

## Patentansprüche

1. Funkrufempfänger mit einer Vielfalt von Warnzeichen mit einer Mehrzahl von Adressen mit einem Decoder (4), der eine Mehrzahl von EIN/AUS-Warnzeichen mit EIN/AUS-Zeitdauern erzeugt, wobei die Muster der besagten EIN/AUS-Zeitdauern jeweils der besagten Mehrzahl von Adressen entsprechen, und einem zum Empfangen der besagten Warnzeichen verbundenen Lautsprecher (7), und wobei:
die besagten Warnzeichen mindestens ein Warnzeichen mit einer EIN-Zeitdauer umfassen, in der eine Mehrzahl von Tönen mit unterschiedlichen Frequenzen (f₁ und f₂) enthalten ist, und
die besagten unterschiedlichen Frequenzen mindestens eine bestimmte Frequenz (f₁) enthalten, für die der besagte Lautsprecher (7) räsonant ist.

2. Empfänger nach Anspruch 1, wobei eine Gruppe von Warnzeichen Einton-EIN-Zeitdauern einer ersten Frequenz (f₁) besitzt, während eine zweite Gruppe von Warnzeichen Zweiton-EIN-Zeitdauern besitzt, wobei sich Teile der ersten Frequenz (f₁) mit Teilen einer zweiten Frequenz (f₂) abwechseln.

3. Empfänger nach Anspruch 1 oder 2, wobei der Decoder (4) eine Mehrzahl von in Reihe geschalteten Frequenzteilern (406-408), Mittel (403) zum Erkennen einer in einem Eingangssignal enthaltenen Adresse, einen Warnmustergeber (405) zum Ausgeben eines das, ein der vom Adresserkennungsmittel ausgegebenen Adresse entsprechendes Warnmuster (I) darstellenden Signals, eine Warnmodussteuerung (404) zum Ausgeben eines Signals (D), das andeutet, welche Kombination der Frequenzen (f₁, f₂) zum Bilden des Warnzeichens zu verwenden ist, und eine Logikschaltung (410-415) zum Bilden der Warnzeichen (J) auf der Grundlage des Ausgangssignals (I) vom Warnmustergeber, des Ausgangssignals (D) von der Warnmodussteuerung und der Ausgangssignale (A, B, C) von den Frequenzteilern (406-408) umfaßt.

4. Verfahren zum Erzeugen einer Mehrzahl von Warnzeichen für einen Funkrufempfänger, dem eine Mehrzahl von Adressen zugewiesen ist, mit dem Schritt des Erzeugens einer Mehrzahl von Warnzeichen mit EIN/AUS-Zeitdauern, wobei die Muster der besagten EIN/AUS-Zeitdauern jeweils der besagten Mehrzahl von Adressen entsprechen, und mit dem Schritt des Erzeugens, als eines der besagten Warnzeichen, eines Warnzeichens mit einer EIN-Zeitdauer, in der eine Mehrzahl von Tönen mit unterschiedlichen Frequenzen (f₁ und f₂) enthalten ist, und wobei die besagten unterschiedlichen Frequenzen mindestens eine bestimmte Frequenz (f₁) enthalten, für die ein Lautsprecher des Empfängers räsonant ist.

## Revendications

1. Récepteur d'appel multi-appels comportant une multitude d'adresses, comprenant un décodeur (4) qui produit une multitude de signaux d'appel à émission/non émission ayant des durées d'émission/non émission, les configurations desdites durées d'émission/non émission correspondant à ladite multitude d'adresses, respectivement et un haut-parleur (7) connecté pour recevoir lesdits signaux d'appel et dans lequel :
lesdits signaux d'appel comportent au moins un signal d'appel ayant une durée d'émission dans laquelle une multitude de tons avec des fréquences différentes (f₁ et f₂) sont inclus, et
lesdites fréquences différentes comportent au moins une fréquence spécifique (f₁) à laquelle ledit haut-parleur (7) résonne.

2. Récepteur selon la revendication 1, dans lequel un groupe des signaux d'appel ont des durées d'émission à une seule tonalité d'une première séquence (f₁) tandis qu'un second groupe de signaux d'appel ont des durées d'émission à deux tonalités avec des parties de la première fréquence (f₁) alternant avec des parties d'une seconde fréquence (f₂).

3. Récepteur selon la revendication 1 ou 2, dans lequel le décodeur (4) comprend une multitude de diviseurs de fréquence reliés en série (406 à 408), un moyen (403) pour détecter une adresse incluse dans un signal d'entrée, un générateur de configuration d'appel (405) pour sortir un signal représentant une configuration d'appel (I) correspondant à l'adresse sortie du moyen de détection d'adresse, un contrôleur de mode d'appel (404) pour sortir un signal (D) indiquant quelle combinaison des fréquences (f₁, f₂) doit être utilisée pour constituer le signal d'appel et un circuit logique (410 à 415) pour constituer les signaux d'appel (J) basés sur le signal de sortie (I) provenant du générateur de configuration d'appel, du signal de sortie (D) provenant du contrôleur de mode d'appel et des signaux de sortie (A, B, C) provenant des diviseurs de fréquence (406 à 408).

4. Procédé pour produire une multitude de signaux d'appel pour un récepteur d'appel auquel une multitude d'adresses sont affectées, comportant l'étape consistant à produire une multitude de signaux d'appel ayant des durées d'émission/non émission, les configurations des durées d'émission/non émission correspondant à ladite multitude d'adresses, respectivement et comprenant l'étape consistant à :
produire comme un desdits signaux d'appel un signal d'appel ayant une durée d'émission dans lequel une multitude de tonalités avec des fréquences différentes (f₁ et f₂) sont incluses et
lesdites fréquences différentes comportant au moins une fréquence spécifique (f₁) à laquelle un haut-parleur de récepteur résonne.
